(19) Europäisches Patentamt
European Patent Office
Office européen des brevets

(11) **EP 4 738 268 A1**

(12) **EUROPEAN PATENT APPLICATION**

(43) Date of publication:
06.05.2026 Bulletin 2026/19

(21) Application number: 24209507.3

(22) Date of filing: 29.10.2024

(51) International Patent Classification (IPC):
*G06T 15/20* (2011.01)   *G06T 17/00* (2006.01)

(52) Cooperative Patent Classification (CPC):
G06T 17/00; G06T 15/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: AUMOVIO Germany GmbH
60488 Frankfurt am Main (DE)

(72) Inventors:
• Kästingschäfer, Marius
30175 Hannover (DE)
• Bernhard, Sebastian
30175 Hannover (DE)
• Najafli, Eyvaz
30175 Hannover (DE)

(74) Representative: Aumovio Corporation
AUMOVIO Germany GmbH
Taunusstraße 36
80807 München (DE)

(54) **APPARATUS, DATA CARRIER, COMPUTER PROGRAM, TRAINING METHOD, AND METHOD FOR 3D SCENE RECONSTRUCTION**

(57)   Embodiments of the present disclosure relate to an apparatus, a data carrier, a computer program, a training method, and a method for 3D scene reconstruction. The model comprises a series of extrapolation of latent features (ELF) blocks and a feature extractor including multiple transformer blocks. The method comprises obtaining a first latent feature representation of a scene for reference images of the scene from a first transformer block of the feature extractor applied to the reference images and obtaining a second latent feature representation the scene from a second transformer block of the feature extractor applied to the reference images. As well, the method comprises obtaining, based on the first latent feature representation, a first extrapolated representation using a first ELF block, and obtaining, based on the second latent feature representation, a second extrapolated representation using a second ELF block. Further, the method comprises generating one or more novel views of the scene based on the extrapolated representations.

FIG 2

**Description**

Embodiments of the present disclosure relate to an apparatus, a data carrier, a computer program, a training method, and a method for 3D scene reconstruction.

3D scene reconstruction was applied in various applications and in different fields of technology including, e.g., automotive applications (e.g., driving/parking assistant systems).

The reconstruction of 3D scenes from 2D images is a long-standing challenge in computer vision. Recent advancements in novel view synthesis (NVS) due to the use of neural radiance fields (NeRFs) and 3D Gaussian Splatting (3DGS) have renewed interest in the problem. NeRFs and 3DGS learn the 3D scene representation given camera images and pose information. Recent related approaches either focus on novel view synthesis directly, reducing the number of images required for training or reconstructing 3D occupancy:

- Novel View Synthesis methods (I.): Those methods primarily focus on improving the visual quality of the obtained reconstructions. Here recently Gaussian Splats have replaced more implicit representation methods in terms of speed and reconstruction performance.

- Semantic Occupancy prediction (II.): Transforming consistent and reliable 3D representations from 2D RGB image inputs or 2,5D lidar inputs is particularly important within autonomous driving. Methods in this domain usually do not rely on differentiable volume rendering but apply other methods to parameterize a voxelized space.

- Sparse 3D reconstruction (III.): The original NeRF method relied on many RGB images for regularizing the learned scene representation. Many methods attempt to reduce the number of images required to learn the scene. Allowing few-image or very recently single-image-to-3D reconstructions.

Novel View Synthesis methods are limited in the following regards:

- Performance of most methods drops dramatically when using fewer images.

- Require absolute pose information, usually estimated using additional compute-intensive structure-from motion algorithms such as COLMAP.

- Often limited in their ability to perform inference over occluded or unobserved parts of the scene.

- Require extensive per-scene training which increases total usage time and makes the methods unfeasible for few-image single-shot inference time usage. Semantic Occupancy prediction methods face the following problems:

- Are limited in their visual fidelity and spatial resolution. Since those models are not aiming at reconstructing the 3D scene faithful but instead focus on occupancy (whether a point in space has non-zero density) and semantic segmentation (to which of the predefined classes does the density belong), they are far from photorealistic or high-fidelity reconstructions.

- Have a fixed spatial resolution due to the lack of scene contraction. They model the scene up to a certain distance (e.g., 20-meter radius in all directions) but are unable to capture details or scene parts further away. Sparse 3D reconstruction methods are limited by the following factors:

- Are often only suited for inward-facing camera setups with significant view overlap. Ego-exo view generalization as required for autonomous driving applications is thus difficult for those methods.

- Existing methods are mainly tackling bounded scenes, particularly single objects with transparent or white scene backgrounds.

- Many methods rely on expensive inference time-optimization (for example common within most diffusion models).

Existing approaches focus on pixel-aligned explicit 3D primitive prediction, which restricts the ability of those models to generalize to potentially unseen regions. Furthermore, reconstructing large scenes from a handful of observations is difficult when the number of primitives used to represent the scene is bounded above by the number of input views.

Hence, there may be a demand for an improved concept of reconstructing 3D scenes.

This demand may be satisfied by the subject-matter of the appended independent claims. In particular, the approach proposed herein may tackle at least one of the challenges are drawbacks mentioned above. Optional embodiments are disclosed in the appended dependent claims.

Embodiments of the proposed approach are based on the finding that a hierarchical model architecture allows a separate training of blocks for latent feature extrapolation.

Embodiments of the present disclosure provide a method for 3D scene reconstruction using a machine-learning-based model. The model comprises a series of extrapolation of latent features (ELF) blocks and a feature extractor including multiple transformer blocks. The method comprises obtaining a first latent feature representation of a scene for reference images of the scene from a first transformer block of the feature extractor applied to the reference images and obtaining a second latent feature representation the scene from a second transformer block of the feature extractor applied to the reference images. As well, the method comprises obtaining, based on the first latent feature representation, a first extrapolated representation using a first ELF block, and obtaining, based on the second latent feature representation, a second extrapolated representation using a second ELF block. Further, the method comprises generating one or more novel views of the scene based on the extrapolated representations.

In doing so, the model is not learned during interference but instead trained to perform ego-exo view generalization which is why interference speed may be higher than in other approaches suggesting that the model is trained during inference.

Also, the proposed approach provides a higher visual fidelity. Firstly, the proposed approach allows that only to predict depth or semantic segmentation maps but instead predicts original RGB values. Secondly, the proposed approach outperforms other approaches in peak signal-to-noise ratio (PSNR), structural similarity index (SSIM), and/or learn perceptual image patch similarity (LPIPS). The hierarchial architecture structure iteratively refines existing representations leading to those better results. The use of expressive latents within the architecture facilitates a number of downstream tasks like the mentioned semantic segmentation.

As a skilled person will appreciate, the proposed architecture allows that the ELF blocks combine information from the latent feature representations, e.g., with "unseen" parts of the scene and camera parameters for an extended understanding of the scene through the extrapolated representations for a more informed generation of novel views than in other approaches, e.g., only relying on reference images of scenes, as laid out in more detail later.

In examples, the first transformer block is upstream to the second transformer block and the first ELF block is upstream to the second ELF block.

Some embodiments are based on the finding that initializing the ELF blocks based on virtual views of the scene which may be generated based on the reference views and (extrinsic and/or intrinsic) camera parameters (e.g., position, orientation, field of view, focal length, principal point offset, and/or the like)

Accordingly, obtaining the first and second extrapolated representation may comprise obtaining initial virtual views of the scene based on the reference images and camera parameters for recording the reference images. Further, obtaining the first and second extrapolated representation may comprise generating the first and the second extrapolated representation based on the initial virtual views as input for initializing the ELF blocks. In practice, the first latent feature representation may be used as conditioning signal for the first ELF block and the second latent feature representation as conditioning signal for the second ELF block. In this way, "unseen" views become "seen" which allows a succeeding stage a complete scene reconstruction, e.g., by predicting explicit Gaussian attributes from the extrapolated representations.

In some environments, generating the novel views comprises projecting the first and second extrapolated representation to a reduced number of dimensions and fusing the projected extrapolated representations for generating the novel views based on the fused extrapolated representations. Fusing the projected extrapolated representations makes the representation multi-view consistent and more complete since the content of information is increased for the novel view synthesis stage.

Optionally, generating the novel views further comprises obtaining a depth map from the fused projected extrapolated representations, obtaining a feature map based on an outcome of the series of ELF blocks, and generating the novel views based on the depth map and the feature map of the scene.

A skilled person having benefit from the present disclosure will appreciate that the proposed approach may be applied for an arbitrary number of transformer blocks and ELF blocks. So, the hierarchical architecture described for the first and the second transformer and ELF blocks may be similarly applied for more transformer and ELF blocks.

Accordingly, the method may further comprise obtaining one or more further latent feature representations of the scene for the reference images from one or more further transformer blocks of the feature extractor applied to the reference images and obtaining, based on the further latent feature representations, a one or more further extrapolated representations using respective further ELF blocks. In doing so, one of the transformer blocks may be assigned to one of the ELF blocks.

Further, the skilled person will appreciate that the novel views may be applied for controlling movable devices or cyber physical systems.

Accordingly, embodiments of the method may further comprise providing the novel views for controlling a cyber physical system.

The cyber physical system, e.g., comprises or corresponds to a vehicle, an autonomous or assisted driving system for a vehicle, or a robot. In automotive applications, the novel views are, e.g., provided to the autonomous or assisted driving system for navigating or maneuvering the vehicle through a traffic environment.

Further embodiments of the present disclosure provide a training method for training a machine-learning-based model for 3D scene reconstruction. The (machine-learning-based) model comprises a feature extractor including multiple transformer blocks and a series of ELF blocks. The training method comprises training the feature extractor based on training data in a self-supervised way. Further, the training method comprises obtaining a first latent feature representation of sample images as well as of target views of a scene from a first transformer block of the trained feature extractor applied to the sample images and target views and obtaining a second latent feature representation of sample images as well as of target views of the scene from a second transformer block of the trained feature extractor applied to the sample images and target views. The training method suggests training a first and a second ELF block based on initial virtual views for the scene, the first latent feature representation of the sample images as conditioning signal for the first ELF block and the first latent feature representation of the target views as ground truth for the first ELF block, and the second latent feature representation of the sample images as conditioning signal for the second ELF block and the second latent feature representation of the target views as ground truth for the second ELF block.

In doing so, the hierarchical architecture enables isolated training of each stage, i.e., of the feature extractor and the series of ELF blocks which simplifies model development and optimization procedures. Further, the proposed training method may provide an efficient model for inverse projection/reconstruction of 3D scenes from 2D images.

Further embodiments provide a computer program comprising instructions which, when the computer program is executed by a computer, cause the computer to carry out an embodiment of the proposed method.

Still further embodiments provide a computer-readable data carrier having stored there on the proposed computer program.

Other embodiments provide an apparatus comprising one or more interfaces for communication and a data processing circuit configured to execute an embodiment of the proposed method.

Further, embodiments are now described with reference to the attached drawings. It should be noted that the embodiments illustrated by the referenced drawings show merely optional embodiments as an example and that the scope of the present disclosure is by no means limited to the embodiments presented:

Brief description of the drawings

Fig. 1 schematically shows the pinhole camera model;

Fig. 2 shows a flow chart schematically illustrating an embodiment of a method for 3D scene reconstruction using a machine-learning-based model;

Fig. 3 shows a block diagram schematically illustrating an exemplary architecture in accordance with the proposed approach;

Figs. 4a, 4b & 4c show flow charts schematically illustrating a more detailed view of the architecture and components thereof;

Fig. 5 shows a flow chart schematically illustrating an embodiment of a method for training a machine-learning-based model for 3D scene reconstruction; and

Fig. 6 shows a block diagram schematically illustrating an embodiment of an apparatus according to the proposed approach.

It should be understood that various modifications and variations may be made without departing from the scope of the present disclosure. Accordingly, the detailed description and specific examples provided herein are intended to be illustrative rather than limiting. Where appropriate, features of different embodiments may be combined or substituted to form further embodiments. The figures and examples are not necessarily drawn to scale, and like numerals in different figures may refer to similar elements. It is to be noted that the present disclosure can be practiced in the absence of any element not specifically disclosed herein, unless otherwise indicated.

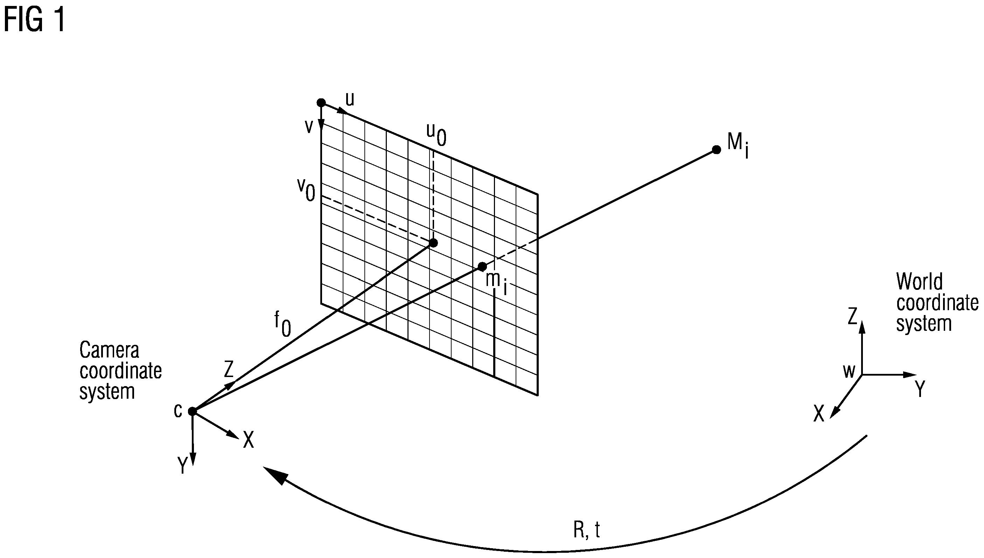

Learning an inverse mapping from 2D image space back to the original 3D space has always been at the forefront of computer vision research. In contrast to mapping from world space to camera space, which can readily be performed once respective cameras' extrinsic and intrinsic parameters are known, performing inverse transformation/mapping is usually more complex. When projecting points with features, e.g., texture, from 3D space to the image space, camera models, such as widely used pinhole model, usually apply projective geometry (see Fig. 1). Following an illustrative example of a pinhole camera model, once intrinsic parameters $\mathbf{K}$, storing focal lengths on the $x$ and y directions $f_x\, f_y$ and corresponding principal point offsets $c_x\, c_y$ along with extrinsic parameters comprising a rotation matrix R and translation vector T are given, location of the 3D point $M_i$ on 2D image plane $m_i$ can be calculated as follows:

$$\mathbf{m_i} = \mathbf{K}(\mathbf{RM_i} + T)$$

After the computations, only image space coordinates of $m_i$ are used to find a point on a nearby pixel. This approach discards remaining information needed for tracing the original point location back. Working with a calibrated camera setup, conducting inverse projection from 2D image space back to 3D space using only normalized pixel locations can lead to ambiguities in complete 3D reconstruction. For example, without depth information in image space, existing approaches face challenges in achieving a metric reconstruction of a scene, as they can only perform relative geometric lifting.

The present disclosure addresses inverse projection, aiming to reconstruct explicit 3D primitives that capture a scene's geometry and texture from sparse views. These primitives, equipped with accurate location information, can be valuable for various downstream applications such as novel views synthesis (NVS), 3D object detection, and segmentation. In particular, the present disclosure introduces an approach for solving inverse projection challenges with sparse inputs, enabling the generation of comprehensive reconstructions by envisioning unobserved parts of a scene. For this, embodiments of the proposed solution extrapolate information from given reference images to create "virtual views" with predetermined placement and camera parameters (but no actual content). Additionally, the proposed approach suggests a robust pipeline capable of inferring explicit primitives, such as point clouds, for selected scenes, facilitating real-time rendering from new viewpoints.

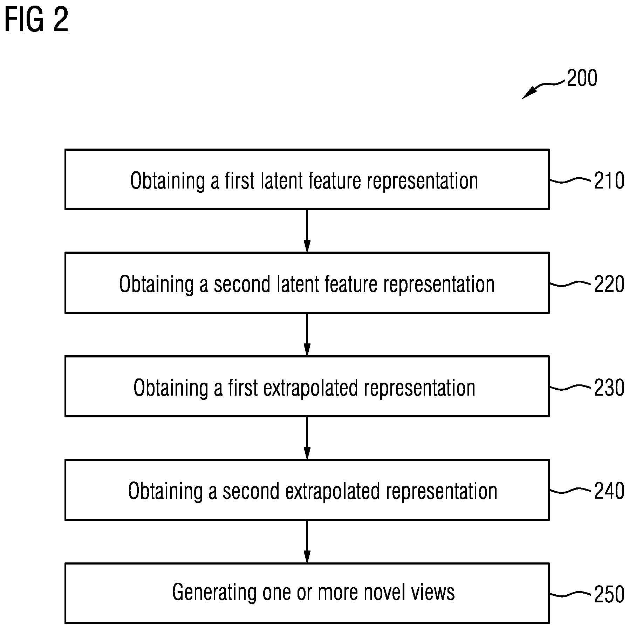

More details of embodiments according to the proposed approach are laid out below with reference to Fig. 2 exemplarily illustrating an embodiment of a method 200 for 3D scene reconstruction using a machine-learning-based model (also referred to herein as "model", "(neural) network", or "architecture".

The model comprises a series of extrapolation of latent features (ELF) blocks and a feature extractor including multiple transformer blocks,

As indicated by the flowchart, the proposed approach may be implemented as a process including multiple steps. Even though embodiments in the present disclosure are explained with reference to a particular order, embodiments are not limited to a particular order of steps. In practice, steps can also be performed in a different order or in parallel/simultaneously.

As can be seen from the flowchart, method 200 comprises obtaining 210 a first latent feature representation of a scene for reference images of the scene from a first transformer block of the feature extractor applied to the reference images and obtaining 220 a second latent feature representation of the scene from a second transformer block of the feature extractor applied to the reference images.

The reference images, e.g., are recorded using a camera (e.g., an RGB camera) or an equivalent (photosensitive) sensor. Accordingly, the reference images may comprise camera images and/or sensor data indicating the scene.

In context of the present disclosure, the latent feature representation can be understood as a representation of abstract, often multi-dimensional, features (in the latent space) extracted by a feature extractor that capture underlying patterns in data but are not directly interpretable by humans. In practice, the latent feature representation, e.g., includes a vector which may include an abstract representation of one or more (visual) features.

For obtaining the first and the second latent feature representation the feature extractor (also referred to herein as "backbone") may process the reference images by passing them through a series of transformer blocks. Each block refines the latent feature representation of reference images such that an early transformer block may capture basic visual features like edges and textures, while a later transformer block may determine on more complex patterns, such as object parts or relationships between objects. So, as the reference images flow through the model, the latent feature representations may become increasingly abstract and semantically rich, progressing from low-level details to high-level conceptual information.

In practice, the first transformer block may be upstream to the second transformer block. Accordingly, the second latent feature representation may be semantically richer than the first latent feature representation.

The method 200 further comprises obtaining 230, based on the first latent feature representation, a first extrapolated representation using a first ELF block and obtaining 240, based on the second latent feature representation, a second extrapolated representation using a second ELF block. In doing so, the hierarchical network transfers knowledge from the reference images into the virtual views, as laid out in more detail later.

The series of ELF blocks can be understood as a multi-stage neural network wherein the stages correspond to the aforementioned ELF blocks. The ELF blocks may be configured such that the ELF block take an output of a (directly) preceding ELF block (if available). They may be trained applying one or more cc cross-attention and *cs* self-attention operations for exchanging information intra-images and inter-images, as laid out in more detail later.

Further, method 200 comprises generating one or more novel views of the scene based on the extrapolated representations.

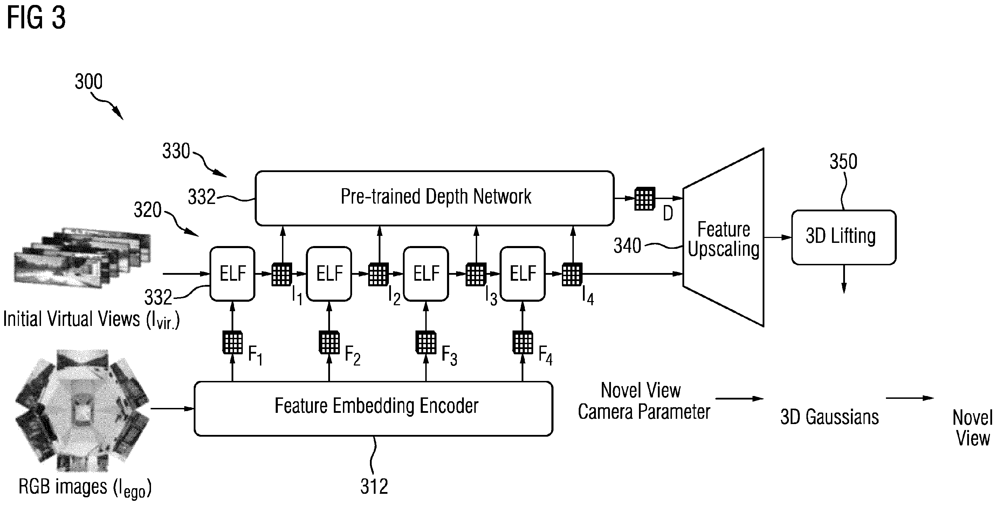

Further details are now laid out below with reference to Fig. 3 of an exemplary architecture for the proposed approach.

As illustrated, the architecture 300 may comprise different stages 310, 320, and 330.

A first stage 310 comprises a feature extractor 312, also referred to herein as "backbone" or "feature embedding encoder"), which includes a series of transformer blocks, as laid out above. The feature extractor 312 is applied to multiple reference images referred to herein as "RGB images" $I_{ego}$. Each of the transformer blocks generate a latent feature representation $F_1, ... , F_4$. The skilled person will understand, that the proposed approach may be applied for an arbitrary number of transformer blocks. Here, the proposed approach is explained with reference to four transformer blocks.

A second stage 320 includes a series of ELF blocks 322. Each of the ELF blocks may be assigned to one of the transformer blocks. Accordingly, the same number of transformer and ELF blocks are provided. In particular, the ELF blocks 322 and the transformer blocks may be assigned to each other by their order so that ELF blocks and transformer blocks of the same number in the order are assigned to each other, e.g., the first transformer block and ELF block regarding their order are assigned to each other.

As can be seen, each ELF block 322 is applied to a latent feature representation $F_1, ... , F_4$ of a respective transformer block for generating and extrapolated representation.

The ELF block, which is the first one the series of ELF blocks, generates an extrapolated representation based on initial virtual views $I_{vir}$ and the latent feature representation from a transformer block, which is the first one in the feature extractor's serious of transformer blocks.

Subsequent ELF blocks each generate an extrapolated representation based on an outcome of a (directly) preceding ELF block and a respective latent feature representation from a transformer block assigned to them.

The extrapolated representations are then provided to a (pre-trained) depth network/model 332 (also referred to herein as "depth map head") for generating a depth map D of the scene. The last ELF block provides its outcome to the depth network 332 and for feature upscaling 340. The outcome of the feature upscaling 340 is, then, "lifted" into 3D (see step 350) for generating 3D Gaussians based on novel view camera parameters to obtain novel views of the scene for desired perspectives.

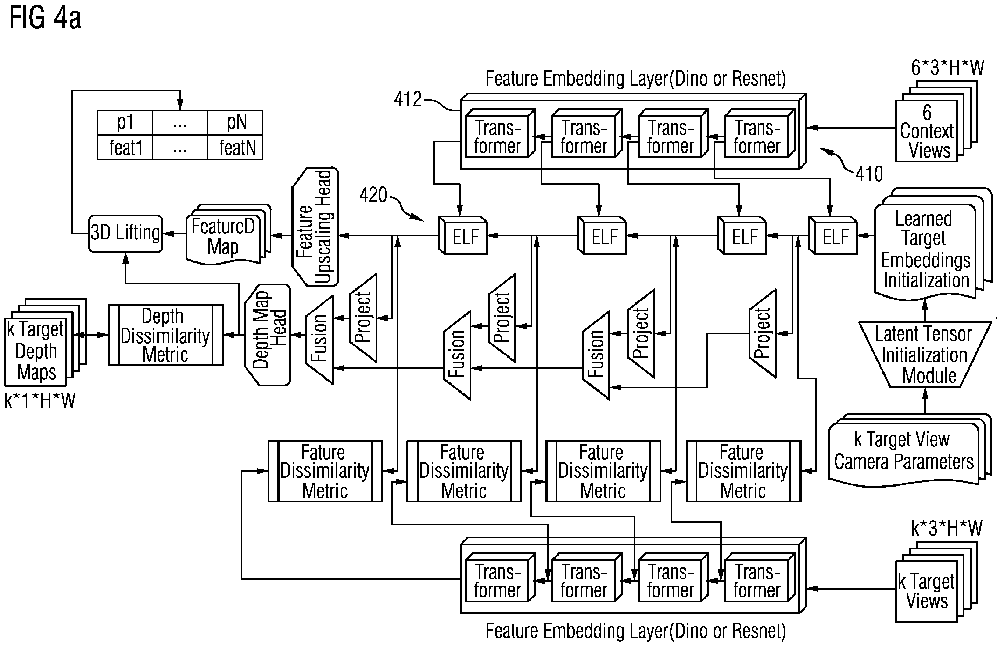

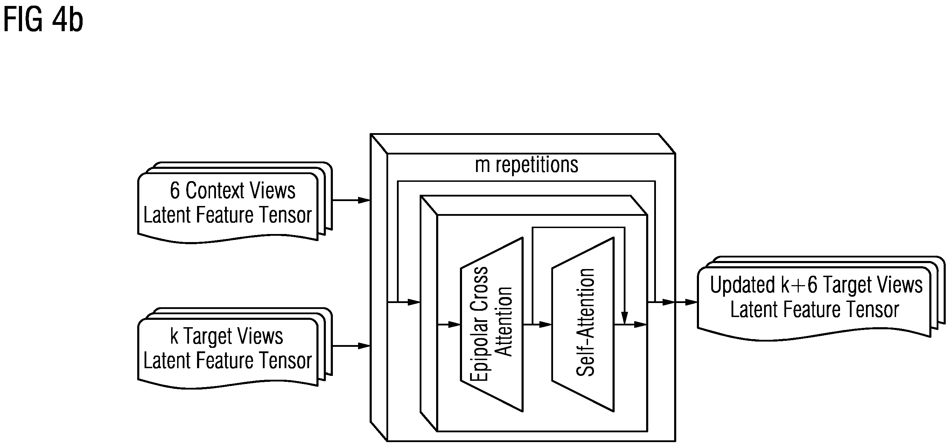

Further aspects and details are now explained in more detail below with reference to Figs. 4a - 4c.

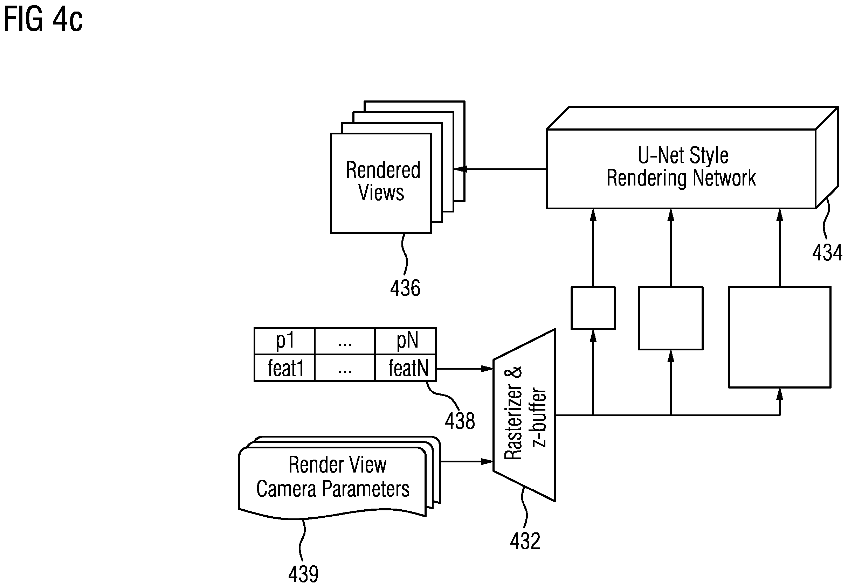

As mentioned above, the present disclosure suggests a network architecture including multiple stages two of which to solve problems associated with prior methods, especially one constraining model only to the reference information content. A first stage 410 of the architecture, named "backbone", is configured to predict "unseen" views of the scene in latent space and low-resolution color space. A second stage 420 of the architecture, called "translator", is configured to take complete information, including ground truth data for reference views (reference images) and inferred geometric and texture data for "virtual views", and is configured to predict explicit Gaussians (Gaussian Splats) with corresponding size, rotation, color, and/or opacity parameters. The proposed approach may use a Gaussian Rasterizer framework 432 and a rendering network 434 to render a scene from camera parameters 439 for novel views and (Gaussian) Splats 438 predicted by the suggested network to provide rendered views 436 (see Fig. 4c).

It is noted that even though the present disclosure refers to Gaussian Splats, in practice also alternatives to Gaussian Splats may be used, e.g., other types of splats (point-based splats, elliptical splats, blob/disk splats, radial basis function (RBF) splats, and/or the like) or other types of representations (e.g., point clouds, voxel grids, meshes, and/or the like).

It is suggested that the reference images are encoded in dense latent space as follows:

Encoding images in dense latent space

The backbone is applied to $k_{ref}$ RGB images $I_{ref} \in \mathbb{R}_{[0,1]}^{3 \times h \times w}$ and camera parameters $K_{ref}, R_{ref}, T_{ref}$ for reference views to extract features of a scene from the reference views (also referred to herein as "context views" or "reference images"). Further, $k_{vrt}$ 'virtual' views are generated based on camera extrinsic and intrinsic $K_{vrt}, R_{vrt}, T_{vrt}$. Whereby the virtual views are initialized as properly shaped tensor representations. The parameters for the virtual views can either be interpolations of existing camera parameters or be given together with the novel views. For this, $K_{vrt}, R_{vrt}, T_{vrt}$ deviate not more than a predefined maximum deviation from the camera parameters for the reference view.

The first stage 410 encodes the reference views using a pre-trained feature extractor (e.g., DINOV2) denoted as $f_{FE}(\cdot)$ following equation (1).

$$(l_{ref}^i, g_{ref}^i)_{i=1}^n = f_{FE}(I_{ref}) \tag{1}$$

where $(l_{ref}^i)_{i=1}^n \in \mathbb{R}_{[0,1]}^{d_E \times (h/14) \times (w/14)}$ denotes local feature encoding while $(g_{ref}^i)_{i=1}^n \in \mathbb{R}^{d_E}$ represents global feature encoding, namely predefined class token [CLS]. Corresponding $n$ and $d_E$ are determined based on the number of queried transformer layers and related feature dimensions. As tensor dimensions per layer possess the same shape, designing network blocks becomes easier. Original local embeddings of the feature extractor are not rich enough with texture information for novel view synthesis. To enforce texture preservation, it is proposed to concatenate normalized RGB tensors resized to the same shape as local latent codes, which leads to $(l_{ref}^i)_{i=1}^n \in \mathbb{R}_{[0,1]}^{d_E \times (h/14) \times (w/14)}$.

The feature extractor can be trained in a self-supervised manner, e.g., using a self-distillation mechanism. As the feature extractor is capable of learning geometrically and semantically consistent local and global feature tokens, it can be used in several downstream tasks, including monocular depth prediction. Thus, utilizing the feature extractor allows the employing of pre-trained depth predictors to lift features from 2D image space back to 3D space. Furthermore, as extracted latent features are already geometrically rich, one can subsequently employ them to transfer information between views and achieve more reliable and cross-view consistent features, as laid out in more detail later.

Further, features are extrapolated towards virtual views, as follows:

Extrapolating features towards virtual views

Few-image to 3D reconstruction methods may be restricted to working only with the given reference image information. That is where the proposed method's advantage in 'envisioning' the content of the possible virtual view's shines. Once 'unseen' views become 'seen,' the succeeding stage in the proposed pipeline designed to predict explicit Gaussian attributes/splats from those latent features get extra information needed to achieve complete scene reconstruction.

To this end, obtaining the first and second extrapolated representation may comprise obtaining initial virtual views of the scene based on the reference images and camera parameters for recording the reference images. The first and the second extrapolated representation are then generated based on the initial virtual views as input for initializing the ELF blocks and the first latent feature representation as the conditioning signal for the first ELF block and the second latent feature representation as conditioning signal for the second ELF block, as laid out in more detail below.

As mentioned above, the proposed approach suggests a hierarchical network capable of transferring knowledge from reference to the "virtual" views. The virtual views may be obtained using a neural network trained to generate virtual 3D views from single 2D images. For this, the neural network may be configured to generate a depth map from the 2D images, here, e.g., the reference images. A skilled person will appreciate that various networks such as MiDaS (Mixed Depth Estimation), DenseDepth, DepthNet, DeepLab, DepthAnythingV2, or any other neural network for monocular depth estimation may be used for this. In the present example, e.g., DepthAnythingV2 is applied.

Once latent feature tensors of size $[(d_E + 3) \times (h/14) \times (w/14)]$ from different layers of sequential transformer architecture are retained for the reference views, it is proposed to apply a fine-tuned DepthAnythingV2 model (or an equivalent thereof) to determine a near metric depth map of size $[1, h, w]$ of corresponding pixels. As the camera parameters are known, one can employ equation (2) along with a resized depth map $D \in \mathbb{R}^{1 \times h/14 \times w/14}$ to determine an approximate 3D position of a reference feature at pixel location $\mathbf{m}_i$.

$$\mathbf{M_i} = \begin{bmatrix} \mathbf{R}_{ref} & \mathbf{T}_{ref} \\ 0^T & 1 \end{bmatrix}^{-1} \begin{bmatrix} \mathbf{K}_{ref} & 0 \\ 0^T & 1 \end{bmatrix}^{-1} \cdot \widehat{\mathbf{m}}_i \text{ where } \widehat{\mathbf{m}}_i = (\mathbf{m}_i, \mathbf{1}, \mathbf{1/D_i}) \tag{2}$$

By applying equation (2) on the features of the $k_{ref}$ reference images, the information given in 2D is lifted onto 3D space and projected back to 'virtual' views via point cloud rendering. Embodiments of the proposed approach are based on the finding that a specified initialization form resulting from this leads to better network performance than random initialization.

After performing such informed initialization for unseen parts of the scene denoted as $\{\tilde{l}_{vrt}^l\}_{i=1}^n$, $\{\tilde{g}_{vrt}^l\}_{i=1}^n$, sequential layers of the hierarchical architecture are applied, wherein each layer takes the output of an earlier layer/previous layer along with ground truth latent information (here, latent feature representations from the transformer blocks) for the reference images (see Fig. 4a).

The $n$ ELF blocks perform a succession of cc cross-attention and cs self-attention operations. In this way, the ELF blocks are configured to exchange information intra-images (i.e., within (the same) images) and inter-images (i.e., between different images) for the reference images as in the following equations $\forall\ i \in \{1, ... , n\}$, wherein | denotes a concatenation of tensors across view dimension:

$$\hat{l}^i_{vrt} = \hat{l}^{i-1}_{vrt} + \tilde{l}^i_{vrt} \tag{3}$$

$$\{\hat{l}^i_{ref} | \hat{l}^i_{vrt}\}_{i,j} + = \text{CrossAttn}(\{\hat{l}^i_{ref} | \hat{l}^i_{vrt}\}_{i,j-1}) \forall j \in \{1, ..., cc\} \tag{4}$$

$$\{\hat{l}^i_{ref} | \hat{l}^i_{vrt}\}_{i,k} + = \text{SelfAttn}(\{\hat{l}^i_{ref} | \hat{l}^i_{vrt}\}_{i,k-1}) \forall j \in \{1, ..., cs\} \tag{5}$$

To simplify the cross-attention operations and decrease the run-time, at the poll the geometry and constraints may be applied between the tensors given as input to the equation (4). Given extrinsic and intrinsic camera parameters, e.g., for two cameras, denoted as $\mathbf{K}_1$, $\mathbf{R}_1$, $\mathbf{T}_1$ and $\mathbf{K}_2$, $\mathbf{R}_2$, $\mathbf{T}_2$, and the position of a pixel $x_1$ in a first image (reference image), the position of a corresponding pixel $\hat{x}_2$ in a second image of the reference images can be found as in the following equation:

$$\hat{x}_2 = [\mathbf{K}_2^{-T} \cdot [\mathbf{T}_{relative}]_\times \cdot \mathbf{R}_{relative} \cdot \mathbf{K}_1^{-1}] \cdot x_1 = 0 \tag{6}$$

wherein vectors $x_1$ and $\hat{x}_2$ may contain disparity information as well. Corresponding matrices $\mathbf{R}_{relative}$ and $\mathbf{T}_{relative}$ denote a relative rotation and translation between the cameras of interest. They may be calculated from $\mathbf{R}_1$, $\mathbf{T}_1$, $\mathbf{R}_2$, $\mathbf{T}_2$. Using equation (6) visible features are collected from other views per every pixel of given reference views which will constitute keys $\mathcal{K}$ and values $\mathcal{V}$. Taking a latent and the value for a respective pixel as a query $\mathcal{Q}$, the following attention formula may be applied:

$$\text{Attn}(\mathcal{Q}, \mathcal{K}, \mathcal{V}) := \text{softmax}((\mathcal{Q} + \gamma(\mathbf{P})\mathcal{W}^{\mathcal{Q}})(\mathcal{K} + \gamma(\mathbf{P})\mathcal{W}^{\mathcal{K}})^T)(\mathcal{V} + \gamma(\mathbf{P})\mathcal{W}^{\mathcal{V}}) \tag{7}$$

where $\gamma(P)$ represents an absolute positional encoding and respective weights $\mathcal{W}^{\mathcal{Q},\mathcal{K},\mathcal{V}}$ are learned during training. In embodiments, different attention operations mechanisms may be used within the ELF blocks. Preferably, Memory Efficient Attention may be applied due to its efficient implementation, resulting in lowered computer time. Besides projecting the latent feature representations from the reference images to 3D space and back-projecting them to the "virtual" views, the ELF blocks are further assisted with those back-projected features along with the latent features of the reference views.

A sequence of convolutional neural network (CNN) and multilayer perceptron (MLP) layers $f^i_{CLS}(\cdot)$ may be used to transform the latent feature representations into a global information in the form of *CLS* tokens as in the following equation (8). Comparing them against ground truth *CLS* tokens allow to guide the network during training better.

$$\{\hat{g}^i_{ref} | \hat{g}^i_{vrt}\} = f^i_{CLS}(\{\hat{l}^i_{ref} | \hat{l}^i_{vrt}\} \forall i \in \{1, ..., n\}) \tag{8}$$

As indicated by the boxes labeled "Project" the first and second extrapolated representation are projected on a reduced number of dimensions and, then, fused (e.g., concatenated) with an output of a subsequent ELF block. In this way, the latent feature representations are (at least indirectly) fused with each other.
Then, a depth map is obtained from the fused projected extrapolated representations.
For this, after a final layer of the hierarchical architecture, predictions for "virtual" views from the ELF blocks are retrieved and passed through a pre-trained depth head to obtain a near metric depth map for the extrapolated representations (including, e.g., extrapolated features and texture). Then, the same procedure is applied to the left information from the reference images into 3D space but on the "virtual" views with corresponding camera parameters $K_{vrt}$, $R_{vrt}$, $\mathbf{T}_{vrt}$ and, thus, in paint unobserved parts of the scene. To acquire relatively better and faster renderable primitives, a second stage of the pipeline may transform pixel-level information with corresponding latent codes and approximate depth maps into parameters required to characterize $\mathbb{N}$ 3D Gaussian Splats, as described below in the next section.
Further, a feature map based on an outcome of the series of ELF blocks and the novel views are generated based on the depth map and the feature map of the scene.

Real-time rendering via Splatting

A third stage (see Fig. 4c) of the proposed framework comprises a UNet-like architecture, also referred to herein as "translator" and denoted as $f_T(\cdot)$, which takes aggregated latent, texture, and approximate depth information $\{\boldsymbol{b}_{ref}|\boldsymbol{b}_{vrt}\}$ (from the depth maps) for the reference images and the virtual views as input (see equation (8)).

$$\{\boldsymbol{b}_{ref}|\boldsymbol{b}_{vrt}\} \in \mathbb{R}^{(k_{ref}+k_{vrt})\times(d_E+3+1)\times(h)\times(w)} \tag{8}$$

Following the same strategy is feed-forward networks mapping from image space directly to 3D Gaussians, and output of the UNet-like architecture may be directly mapped to parameters of the splats that can be rendered from any viewpoint. Conducting similar operations as an equations (6) and (7), an epipolar geometry-constraint cross-attention mechanism is applied at the deepest layer of the UNet-like architecture, thereby enforcing multi-view consistency between given views. To further improve the generalizability of the proposed method, a probabilistic depth map prediction is applied. Thus, the translator $f_T(\cdot)$ may predict the location $\mu$ of g Gaussians per pixel for the $k_{ref} + k_{vrt}$ views along with the opacity $\alpha$, covariance $\Sigma$, and spherical harmonics $\mathcal{S}$ as in equation (9).

$$\{\mu, \alpha, \Sigma, \mathcal{S}\}_{i=1}^{g} = \mathrm{Union}\left(\left\{\mathrm{Flattent}\left(f_T\left(\{\boldsymbol{b}_{ref}|\boldsymbol{b}_{vrt}\}\right)\right)\right\}_{i=1}^{g}\right) \tag{10}$$

wherein the Flatten operation takes the output of the translator $f_T(\cdot)$ and flattens it across spatial dimensions. To obtain (final) N Gaussian Splats, Union is applied for the Gaussians $\forall\, i \in \{1, \dots, g\}$. Once the (explicit) Gaussians are inferred, they may be rendered (in real-time) from arbitrary or predefined novel views.

Training objectives

**Backbone training**

The hierarchical architecture enables isolated training of each stage, in particular, of the feature extractor and the ELF blocks. So, the proposed decomposed structure may simplify the development of the model and optimization procedures.

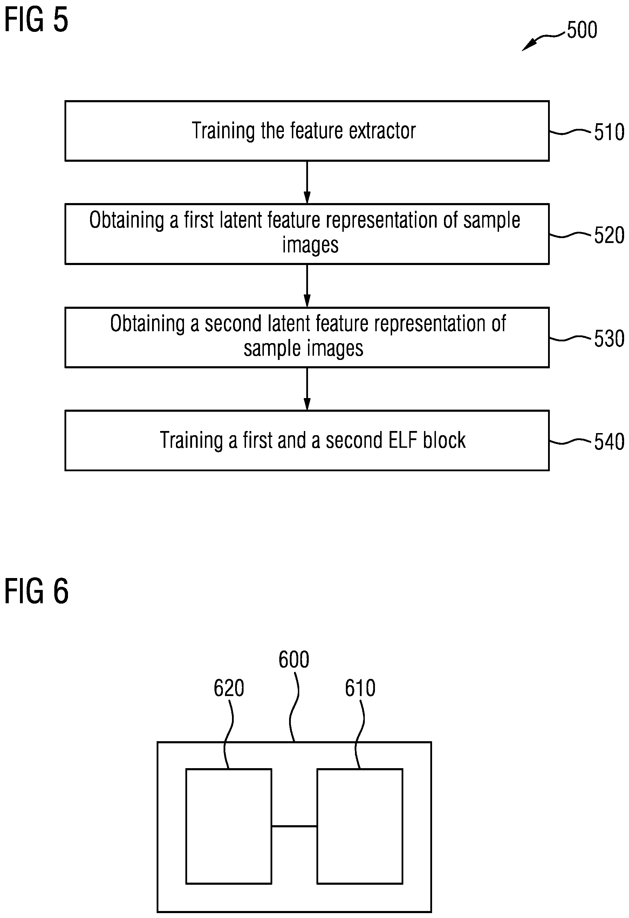

An exemplary embodiment of a respective training method 500 for training a machine-learning-based model proposed herein for 3D scene reconstruction is schematically illustrated in Fig. 5.

As can be seen from the flowchart, the training method 500 comprises training 510 the feature extractor using training data including labelled image data.

In doing so, the feature extractor learns to transform raw input data, such as images into a more compact and meaningful representation that highlights important patterns or attributes. This may involve using a deep neural network, such as a convolutional neural network (CNN) or any other appropriate neural network. The model may be first initialized with random or pre-trained weights, and then fed a large dataset of labeled or unlabeled samples. If the data is labeled, supervised learning may be applied, where the model adjusts its weights by reducing or ideally minimizing a difference between its predicted output and the (ground truth) labels. In the case of unlabeled data, unsupervised techniques like autoencoders or contrastive learning can be used to learn useful features by forcing the model to capture essential data structures. During training, backpropagation and optimization algorithms such as stochastic gradient descent (SGD) may be used to adjust the model's parameters, enabling it to gradually learn the most relevant features.

As well, the training method 500 comprises obtaining 520 a first latent feature representation of sample images as well as of target views of a scene from a first transformer block of the trained feature extractor applied to the sample images and target views.

Also, the training method 500 comprises obtaining 530 a second latent feature representation of sample images as well as of target views of the scene from a second transformer block of the trained feature extractor applied to the sample images and target views.

For this, e.g., an output of the first and the second transformer block for the sample images and the target views may be captured.

The training method 500 further comprises training 550 a first and a second ELF block based on initial virtual views for the scene, the first latent feature representation of the sample images as conditioning signal for the first ELF block and the first latent feature representation of the target views as ground truth for the first ELF block and the second latent feature representation of the sample images as conditioning signal for the second ELF block and the second latent feature representation of the target views as ground truth for the second ELF block.

For this, sample images may be obtained, e.g., using a test/training set up including a multi-camera system and the camera system may be positioned in an exemplary scene. The multi-camera system, e.g., records the sample images. Preferably, the sample images are similar or comparable to reference images in a desired use case. Accordingly, for automotive applications, the sample images may represent one or more traffic scenes.

The initial virtual views may be generated using monocular depth estimation as laid out in more detail above.

As the skilled person will appreciate, the conditioning signal may act as a guiding factor, allowing the ELF blocks to tailor its predictions or outputs based on specific criteria. For example, in embodiments, the latent feature representations serve as conditioning signals, helping the model learn to map inputs to desired outputs, e.g., for a consistent mapping and representation of (visual) features. In this way, the conditioning signals may lead to a to more targeted generation. In practice, the conditioning signal, e.g., is concatenated with features in their ELF blocks, allowing it to affect activations and learned representations.

For the sake of simplicity, and subsequent explanations, it is assumed that the reference images are used as sample images. However, it is noted, that in practice the sample images may be different from the reference images. For example, sample images may be recorded during development while the reference images may be recorded during operation.

Accordingly, to compose ground truth data to train the backbone, the same DINOV2 feature encoder [ODM+24] will be applied to $k_{vrt}$ "virtual images $\mathbb{I}_{vrt} \in \mathbb{R}_{[0,1]}^{3 \times h \times w}$ , giving tensors $\{l_{vrt}^i\}_{i=1}^n$ and $\{g_{vrt}^i\}_{i=1}^n \in \mathbb{R}^{d_E}$. In this way, a prediction task in the same latent space is maintained, i.e., the network is taught to learn to map from certain elements $\{l_{ref}^i, g_{ref}^i\}_{i=1}^n$ in one space to the different elements $\{l_{vrt}^i, g_{vrt}^i\}_{i=1}^n$ in an identical space. This allows to formulate a generative process as an interpolation procedure and obtain an exclusive scene understanding. Then, the primary goal of the backbone is to reconstruct latent features and low-dimensional texture per every "virtual" view given reference views. Thus, a loss, e.g., an MSE loss can be enforced between reconstructed features at every stage of the backbone hierarchy while up-weighting errors made over color channels as in equation (11).

$$\mathcal{L}_{backbone}\left([\mathbb{I}_{ref}, \mathbb{I}_{vrt}]\right) = \frac{\lambda_1}{n \cdot (d_E+3)} \times \sum_{i=1}^n \sum_{j=1}^{d_E+3} w_j \times \mathcal{L}_{MSE}\left(\{\hat{l}_{ref}^i\}_j, \{l_{ref}^i\}_j\right) +$$

$$\frac{\lambda_2}{n \cdot (d_E+3)} \times \sum_{i=1}^n \sum_{j=1}^{d_E+3} w_j \times \mathcal{L}_{MSE}\left(\{\hat{l}_{vrt}^i\}_j, \{l_{vrt}^i\}_j\right) + \frac{\lambda_3}{n} \times \sum_{i=1}^n \mathcal{L}_{MSE}\left(\hat{g}_{ref}^i, g_{ref}^i\right) +$$

$$\frac{\lambda_4}{n} \times \sum_{i=1}^n \mathcal{L}_{MSE}\left(\hat{g}_{vrt}^i, g_{vrt}^i\right) \tag{11}$$

where $w_j$ denotes relative weights per channel of local features, higher by the predefined factor for the last three channels. As the backbone takes ground truth reference information as input, the processed version of reference information is also returned after feature exchange with "virtual" views. A loss is applied on those processed tensors, such that even after the information exchange with the "virtual" views, reference features remain as close to the ground truth as possible, as implemented in the first part of equation (11). The first sum acts as a form of regularization in the overall loss function whose influence can be adaptively changed with the preceding factor $\lambda_1$. The last two terms in the backbone loss function are designed to optimize the global *CLS* token predictor $f_{CLS}^i(\cdot)$ .

It is noted that the proposed approach may be applied to various numbers of transformer and ELF blocks.

The novel views may be provided for controlling a cyber physical system.

The proposed approach may be applied in different types of cyber physical systems where 3D scene reconstruction from multiple views may be desired. For example, it may be applied in automotive applications, e.g., for controlling a vehicle to maneuver through traffic or park the vehicle (autonomous driving or parking).

Also, the novel view may be presented to a user controlling the cyber physical system. In an autonomous driving or parking system, this, e.g., helps the user to assess the scene or situation when driving or parking the vehicle.

The proposed method is not limited by a contracted scene representation since the point cloud-like representation can represent unbounded scenes natively. Also the proposed method not only provides the capability to generalize to novel views but also brings freedom in the number of primitives representing the scene. This offers an explicit trade-off between compute time and reconstruction quality. So, the model is further able to reconstruct depth maps and RGB images for novel views via the reconstructed feature maps directly. It is noteworthy that the rendering speed of the proposed method due to the use of Gaussian splatting can be increased significantly. Due to the intermediate point-cloud-like intermediate representation however one is flexible in choosing the final rendering method after training the overall model.

**Translator training**

The dataset used for training may include a number of posed images, which may be split into reference views (inputted into the network) and virtual and novel views for the purpose of training. During the optimization of the translator stage, "render" views can randomly coincide with the "virtual" views. After applying the translator to the provided reference views and the predicted "virtual" views, Gaussian Splats are obtained, which can be rendered (in real-time). The translator (model $\mathcal{R}_{render}$) may be optimized by minimizing the reconstruction error as in equation (12).

$$\mathcal{L}_{recon}(\mathbb{I}_{renderer}) = \frac{1}{n} \times \sum_{i=1}^{h \times w} \mathcal{L}_{MSE}(\mathcal{R}_{render}(\vartheta)_i, \mathbb{I}_{render,i})$$

where $\mathcal{L}_{MSE}$ represents pixel-wise MSE loss applied on normalized pixel values.

The proposed may be implemented in an apparatus, as laid out in more detail with reference to Fig. 6.

Fig. 6 shows a block diagram schematically illustrating an embodiment of such an apparatus 600. The apparatus comprises one or more interfaces 610 for communication and a data processing circuit 620 configured to execute the proposed method.

In embodiments, one or more interfaces 610 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 620 may correspond to or comprise any type of programable hardware. So, examples of the data processing circuit 620, e.g., comprise a memory, microcontroller, field programable gate arrays, one or more central, and/or graphical processing units. To execute the proposed method, the data processing circuit 620 may be configured to access or retrieve an appropriate computer program for the execution of the proposed method from a memory of the data processing circuit 620 or a separate memory which is communicatively coupled to the data processing circuit 620.

In practice, the proposed apparatus may be installed on a vehicle. So, embodiments may also provide a vehicle comprising the proposed apparatus. In implementations, the apparatus, e.g., is part or a component of an assisted or autonomous driving system.

However, in implementations, computing resources for the vehicle may be outsourced to an external server separate from the vehicle. In such implementations, the proposed approach may be also implemented outside of the vehicle.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

**Claims**

1. A method (200) for 3D scene reconstruction using a machine-learning-based model, wherein the model comprises a series of extrapolation of latent features, ELF, blocks and a feature extractor including multiple transformer blocks, the method (200) comprising:

   obtaining (210) a first latent feature representation of a scene for reference images of the scene from a first transformer block of the feature extractor applied to the reference images;
   obtaining (220) a second latent feature representation of the scene from a second transformer block of the feature extractor applied to the reference images;
   obtaining (230), based on the first latent feature representation, a first extrapolated representation using a first ELF block;
   obtaining (240), based on the second latent feature representation, a second extrapolated representation using a second ELF block; and
   generating (250) one or more novel views of the scene based on the extrapolated representations.

2. The method (200) of claim 1, wherein the first transformer block is upstream to the second transformer block and the first ELF block is upstream to the second ELF block.

3. The method (200) of claim 1 or 2, wherein obtaining the first and second extrapolated representation comprises:

   obtaining initial virtual views of the scene based on the reference images and camera parameters for recording the reference images;
   generating the first and the second extrapolated representation based on the initial virtual views as input for initializing the ELF blocks and the first latent feature representation as conditioning signal for the first ELF block and the second latent feature representation as conditioning signal for the second ELF block.

4. The method (200) of any one of the preceding claims, wherein generating the novel views comprises:

   projecting the first and second extrapolated representation to a reduced number of dimensions; and
   fusing the projected extrapolated representations for generating the novel views based on the fused extrapolated representations.

5. The method (200) of claim 4, wherein generating the novel views further comprises:

   obtaining a depth map from the fused projected extrapolated representations;
   obtaining a feature map based on an outcome of the series of ELF blocks; and
   generating the novel views based on the depth map and the feature map of the scene.

6. The method (200) of any one of the preceding claims, wherein the method (200) further comprises:

   obtaining one or more further latent feature representations of the scene for the reference images from one or more further transformer blocks of the feature extractor applied to the reference images; and
   obtaining, based on the further latent feature representations, a one or more further extrapolated representations using respective further ELF blocks.

7. The method (200) of any one of the preceding claims, wherein the method (200) further comprises providing the novel views for controlling a cyber physical system.

8. The method (200) of claim 6, wherein the cyber physical system comprises or corresponds to an autonomous or assisted driving system for a vehicle, or a robot.

9. A training method (500) for training a machine-learning-based model for 3D scene reconstruction, wherein the model comprises a feature extractor including multiple transformer blocks and a series of extrapolation of latent features, ELF, blocks, the training method comprising:

   training (510) the feature extractor using training data including labelled image data;
   obtaining (520) a first latent feature representation of sample images as well as of target views of a scene from a first transformer block of the trained feature extractor applied to the sample images and target views;
obtaining (530) a second latent feature representation of sample images as well as of target views of the scene from a second transformer block of the trained feature extractor applied to the sample images and target views; and

training (540) a first and a second ELF block based on:

initial virtual views for the scene;
the first latent feature representation of the sample images as conditioning signal for the first ELF block and the first latent feature representation of the target views as ground truth for the first ELF block; and
the second latent feature representation of the sample images as conditioning signal for the second ELF block and the second latent feature representation of the target views as ground truth for the second ELF block.

10. A computer program comprising instructions which, when the computer program is executed by a computer, cause the computer to carry out a method (200, 500) of any one of the claims 1 to 9 and/or provide a machine-learning based model obtainable by a training method (500) of claim 9.

11. A computer-readable data carrier having stored thereon the computer program of claim 10.

12. An apparatus (600) comprising:

one or more interfaces (610) for communication; and
a data processing circuit (620) configured to execute a method of any one of the claims 1 to 9 and/or provide a machine-learning based model obtainable by a training method of claim 9.

FIG 1

EP 4 738 268 A1

FIG 2

200

| Obtaining a first latent feature representation | 210 |

| Obtaining a second latent feature representation | 220 |

| Obtaining a first extrapolated representation | 230 |

| Obtaining a second extrapolated representation | 240 |

| Generating one or more novel views | 250 |

FIG 3

EP 4 738 268 A1

# FIG 4a

| p1 | ... | pN |
|---|---|---|
| feat1 | ... | featN |

Feature Embedding Layer(Dino or Resnet)

6*3*H*W

412 — Trans-former | Trans-former | Trans-former | Trans-former

6 Context Views

410

3D Lifting ← FeatureD Map ← Feature Upscaling Head

420

ELF | ELF | ELF | ELF

Learned Target Embeddings Initialization

Project | Project | Project | Project

Fusion | Fusion | Fusion

Depth Map Head

Latent Tensor Initialization Module

k Target Depth Maps

Depth Dissimilarity Metric

k*1*H*W

k Target View Camera Parameters

Fature Dissimilarity Metric | Fature Dissimilarity Metric | Fature Dissimilarity Metric | Fature Dissimilarity Metric

Trans-former | Trans-former | Trans-former | Trans-former

k*3*H*W

k Target Views

Feature Embedding Layer(Dino or Resnet)

EP 4 738 268 A1

# FIG 4b

6 Context Views
Latent Feature Tensor

k Target Views
Latent Feature Tensor

m repetitions

Epipolar Cross
Attention

Self-Attention

Updated k+6 Target Views
Latent Feature Tensor

# FIG 4c

Rendered Views 436

U-Net Style Rendering Network 434

| p1 | ... | pN |
|------|-----|-------|
| feat1 | ... | featN |

438

Rasterizer & z-buffer 432

Render View Camera Parameters 439

EP 4 738 268 A1

19

## FIG 5

500

| Training the feature extractor | 510 |

↓

| Obtaining a first latent feature representation of sample images | 520 |

↓

| Obtaining a second latent feature representation of sample images | 530 |

↓

| Training a first and a second ELF block | 540 |

## FIG 6

600

620    610

Europäisches
Patentamt

European
Patent Office

Office européen
des brevets

## EUROPEAN SEARCH REPORT

**Application Number**

EP 24 20 9507

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/249465 A1 (GUIZILINI VITOR [US] ET AL) 25 July 2024 (2024-07-25)<br>* figures 1-5 *<br>* paragraph [0001] *<br>* paragraphs [0018], [0020] *<br>* paragraph [0022] - paragraph [0024] *<br>* paragraph [0039] *<br>* paragraph [0047] - paragraph [0053] *<br>* paragraph [0060] *<br>----- | 1-12 | INV.<br>G06T15/20<br>G06T17/00 |
| X | BOKUI SHEN ET AL: "GINA-3D: Learning to Generate Implicit Neural Assets in the Wild",<br>ARXIV.ORG, CORNELL UNIVERSITY LIBRARY, 201 OLIN LIBRARY CORNELL UNIVERSITY ITHACA, NY 14853,<br>4 April 2023 (2023-04-04), XP091476951,<br>* abstract *<br>* figures 1,3 *<br>* section 1 "Introduction", last two paragraphs, page 2 *<br>* section 3.2 to 3.4 *<br>----- | 1-12 | |
| A | ANDREW JAEGLE ET AL: "Perceiver IO: A General Architecture for Structured Inputs & Outputs",<br>ARXIV.ORG, CORNELL UNIVERSITY LIBRARY, 201 OLIN LIBRARY CORNELL UNIVERSITY ITHACA, NY 14853,<br>15 March 2022 (2022-03-15), XP091170644,<br>* the whole document *<br>-----<br>-/-- | 1-12 | TECHNICAL FIELDS SEARCHED (IPC)<br><br>G06T |

The present search report has been drawn up for all claims

| Place of search | Date of completion of the search | Examiner |
|---|---|---|
| Berlin | 17 March 2025 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

**EP 24 20 9507**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Najafli Eyvaz ET AL: "sshELF: Single-Shot Hierarchical Extrapolation of Latent Features for 3D Reconstruction from Sparse-Views", arXiv preprint arXiv:2502.04318, 6 February 2025 (2025-02-06), pages 1-12, XP093259205, Retrieved from the Internet: URL:https://arxiv.org/pdf/2502.04318? [retrieved on 2025-03-13] * the whole document * | 1-12 | |

-----

|  |  | TECHNICAL FIELDS SEARCHED (IPC) |
|---|---|---|

The present search report has been drawn up for all claims

| Place of search | Date of completion of the search | Examiner |
|---|---|---|
| Berlin | 17 March 2025 | Gauthier, J |

EPO FORM 1503 03.82 (P04C01)

## ANNEX TO THE EUROPEAN SEARCH REPORT
## ON EUROPEAN PATENT APPLICATION NO.

EP 24 20 9507

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2025

| Patent document cited in search report | Publication date | Patent family member(s) | Publication date |
|---|---|---|---|
| US 2024249465 A1 | 25-07-2024 | NONE | |

EPO FORM P0459

For more details about this annex : see Official Journal of the European Patent Office, No. 12/82